# EUROPÄISCHE PATENTSCHRIFT

(11) **EP 1 724 040 B1**
(45) Veröffentlichungstag und Bekanntmachung des Hinweises auf die Patenterteilung: **03.06.2009**
(21) Anmeldenummer: 05023719.7
(22) Anmeldetag: 29.10.2005
(51) Int. Cl.: B23B 31/10, B23B 31/30

(54) **Spannzangenfutter**
Collet chuck
Pince de serrage

(30) Priorität: 19.03.2005 DE 202005004471 U
(43) Veröffentlichungstag der Anmeldung: 22.11.2006
(73) Patentinhaber: Röhm GmbH, 89567 Sontheim (DE)
(72) Erfinder: Taglang, Johann, 89441 Medlingen (DE)
(74) Vertreter: Hentrich, Swen

(56) Entgegenhaltungen:
- GB-A- 2 362 345
- US-A- 5 060 957
- US-A- 5 340 130

## Beschreibung

Die Erfindung betrifft ein Spannzangenfutter mit einem Futterkörper und mit einer Mehrzahl von zu einer Spannzange zusammengefassten Spannsegmenten, die zu ihrer radialen Verstellung einem einen Spannkonus aufweisenden Spannkonusteil anliegen, das mittels eines axial verschiebbaren Spannkolbens axial verstellbar ist.

Derartige Spannzangenfutter sind aus der Praxis bekannt (siehe z.B. GB-A-2 362 345) und weit verbreitet, um insbesondere lang ausgedehnte Werkzeuge oder Werkstücke spannen zu können, indem die über den Umfang verteilten Spannsegmente zur Anlage an das Werkstück gebracht werden, wenn das Spannkonusteil in axialer Richtung verschoben wird. Die Verstellung der Spannsegmente erfolgt durch den zur Verfügung stehenden Spannkonus einheitlich, wobei bei zylindrischen Werkstücken in beschränktem Umfang eine ausgleichende Spannung erfolgen kann, wenn am Werkstück keine hochpräzise Maßhaltigkeit gegeben ist. Ein zentrisches, ausgleichendes Spannen rechteckiger Werkstücke ist nicht möglich.

Der Erfindung liegt daher die Aufgabe zugrunde, ein Spannzangenfutter der eingangs genannten Art so auszubilden, daß bei einem einfachen Aufbau des Spannzangenfutters und des zu dessen Betätigung erforderlichen Antriebs ein ausgleichendes, zentrisches Spannen auch bei rechteckigen Werkstücken ermöglicht ist.

Diese Aufgabe wird nach der Erfindung bei einem Spannzangenfutter der eingangs genannten Art dadurch gelöst, daß das Spannkonusteil in Umfangsrichtung geteilt ausgebildet ist mit einem inneren Ringkolben und einem äußeren Ringkolben, deren Konussegmente sich in Umfangsrichtung zu dem Spannkonus ergänzen und jeweils nur zwei einander gegenüberliegende Spannsegmente anliegen, und daß der innere Ringkolben und der äußere Ringkolben auf gegenüberliegenden Seiten des Spannkolbens angeordnet und durch ein Waagebalkensystem zur axialen Verstellung mit diesem gekoppelt sind.

Dieses Spannzangenfutter zeichnet sich dadurch aus, daß keine einheitliche Verstellung des Spannkonus in axialer Richtung erfolgen muß, da die Möglichkeit besteht, unterschiedlichen Spannsegmenten unterschiedliche Abschnitte des Spannkonusteils zuzuordnen, so daß die Spannsegmente unterschiedlich verstellt werden können, wobei weiterhin der besondere Vorteil vorliegt, daß dazu kein zweifacher Antrieb erforderlich ist, sondern über das Waagebalkensystem die gewünschte, erforderliche Bewegung des mehrteiligen Spannkonusteils aus der Bewegung des nur einen Spannkolbens abgeleitet wird. Bei einer Verstellung des Spannkolbens wird zunächst das Spannkonusteil mit dem inneren Ringkolben und dem äußeren Ringkolben einheitlich verstellt, bis erste Spannsegmente am Werkstück zur Anlage kommen und die weitere Verstellung des diesen Spannsegmenten zugeordneten inneren Ringkolbens oder des äußeren Ringkolbens hemmen. Über das Waagebalkensystem wird durch die fortgesetzte Verstellung des Spannkolbens auch die Anlage der komplementären Spannsegmente bewirkt, wobei nach dem Ausgleich der relativen Stellung des inneren Ringkolbens und des äußeren Ringkolbens zueinander über die fortgesetzte Verstellung des Spannkolbens die erforderliche Spannkraft aufgebracht werden kann.

Um separat von dem Spannkonus einen ausreichenden Platz zur Realisierung des Waagebalkensystems zur Verfügung zu haben, weisen der Spannkolben und der äußere Ringkolben und der innere Ringkolben jeweils einen Kolbenbund auf, denen das Waagebalkensystem zugeordnet ist.

Vorteilhaft ist es weiterhin, wenn die Spannzange mit ihren Spannsegmenten austauschbar in dem Spannkonusteil angeordnet ist, da so die für unterschiedliche Werkstücke am besten geeignete Spannzange eingesetzt werden kann.

Als zweckmäßig hat sich weiterhin erwiesen, wenn die Spannzange eine geradzahlige Anzahl von Spannsegmenten aufweist, die paarweise zusammengefasst und jeweils paarweise dem inneren Ringkolben oder dem äußeren Ringkolben zur gemeinsamen axialen Verstellung zugeordnet sind. Diese Ausführungsform eignet sich besonders zur Spannung rechteckiger Werkstücke, bei denen die paarweise zusammengefassten Spannsegmente jeweils gegenüberliegenden Seitenflächen des Werkstücks zugeordnet sind.

Um einen einfachen Aufbau zu erreichen, ist im Rahmen der Erfindung weiterhin vorgesehen, daß das Waagenbalkensystem gebildet ist mit einem in einer Aufnahme des Spannkolbens schwenkbar gelagerten Koppelglied, das mit seinen Enden in den äußeren Ringkolben und den inneren Ringkolben eingreift. Dieses Koppelglied definiert in der Aufnahme des Spannkolbens die Drehachse, um die sich der äußere Ringkolben und der innere Ringkolben entgegensetzt relativ zueinander verschieben. Um dabei eine bessere Führung des Koppelgliedes zu erreichen, ist der zentrale Abschnitt des Koppelgliedes ballig geformt.

Um eine hohe Betriebssicherheit zu erreichen und eine Verstellung des äußeren Ringkolbens gegenüber dem Spannkolben und dem inneren Ringkolben ohne die Gefahr von Klemmungen zu erzielen, ist das Koppelglied mehrfach vorgesehen in einer gleichmäßig über den Umfang verteilten Rangordnung.

Einer hohen Betriebssicherheit dient weiterhin, daß jeder Kolbenbund in axialer Richtung im Futterkörper an Führungsflächen geführt ist. Nach einer bevorzugten Ausführungsform zur Realisierung eines Vorderendfutters ist vorgesehen, daß der Spannkolben mit einem Kammerbund in einer mit Druckmittelanschlüssen versehenen Kolbenkammer angeordnet ist. Alternativ besteht auch die Möglichkeit, daß der Spannkolben über eine Zugstange oder ein Zugrohr mit einem doppelt wirkenden Spannzylinder verbunden ist.

Der Förderung einer durch die Spannsegmente erzeugten gleichmäßigen Krafteinwirkung auf das zu spannende Werkstück dient auch, daß zwischen benachbarten Spannsegmenten diese elastisch miteinander koppelnde Koppelelemente angeordnet sind, wobei zweckmäßigerweise die Koppelelemente durch zwischen die Spannsegmente vulkanisierte Gummipuffer gebildet sind.

Im folgenden wird die Erfindung an einem in der Zeichnung dargestellten Ausführungsbeispiel näher erläutert; es zeigen:
- Fig. 1: einen Längsschnitt durch ein erfindungsgemäßes Spannzangenfutter in einer Gestaltung als Vorderendfutter,
- Fig. 2: eine Ansicht aus Richtung des Pfeiles II aus Fig. 1,
- Fig. 3: den Schnitt III-III aus Fig. 1, und
- Fig. 4: den Schnitt IV-IV aus Fig. 1.

In der Zeichnung ist in einer Ausführungsform als Vorderendfutter ein Spannzangenfutter 1 gezeigt, das einen Futterkörper 2 und eine Mehrzahl von zu einer Spannzange 3 zusammengefassten Spannsegmenten 4 aufweist, die zu ihrer radialen Verstellung einem einen Spannkonus 5 aufweisenden Spannkonusteil 6 anliegen. Das Spannkonusteil 6 ist mittels eines axial verschiebbaren Spannkolbens 7 axial verstellbar, wobei der Spannkolben 7 mit einem Kammerbund 8 in einer mit Druckmittelanschlüssen versehenen Kolbenkammer 9 angeordnet ist.

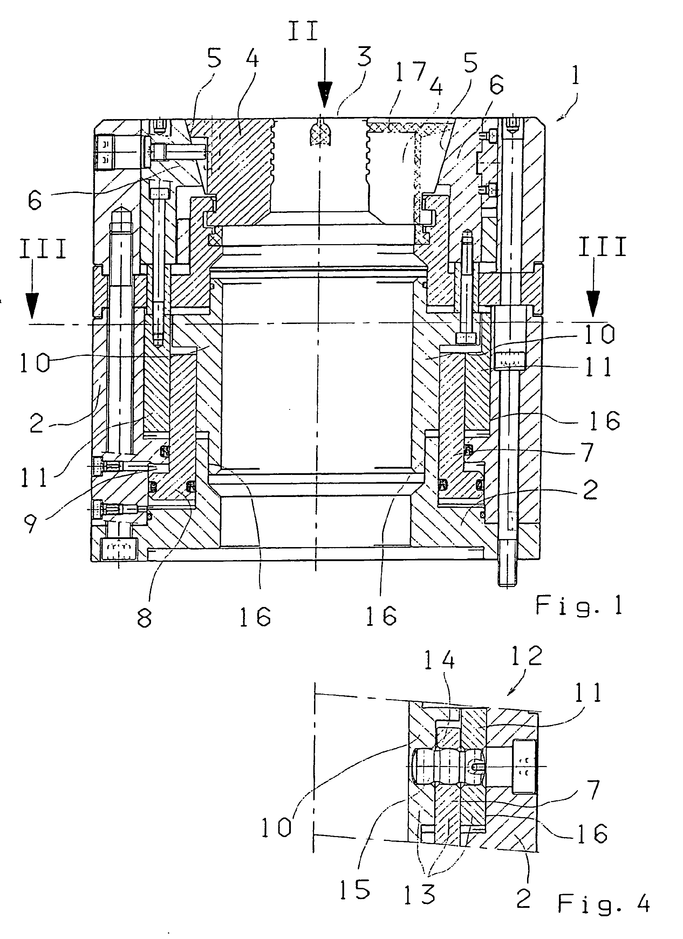

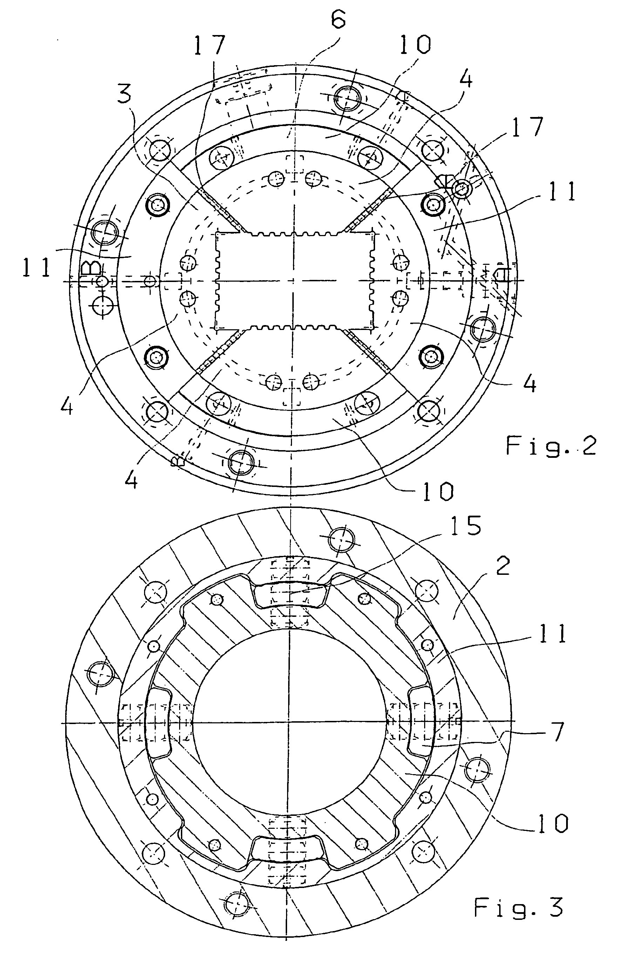

Wie insbesondere in den Figuren 1 und 2 zu erkennen ist, ist das Spannkonusteil 6 in Umfangsrichtung geteilt ausgebildet mit einem inneren Ringkolben 10 und einem äußeren Ringkolben 11, deren Konussegmente sich in Umfangsrichtung zu dem Spannkonus 5 ergänzen und jeweils nur einem der Spannsegmente 4 anliegen (Fig. 2). Der innere Ringkolben 10 und der äußere Ringkolben 11 sind auf gegenüberliegenden Seiten des Spannkolbens 7 angeordnet und durch ein Waagebalkensystem 12 zur axialen Verstellung mit diesem gekoppelt. Dazu weisen sowohl der Spannkolben 7 als auch der äußere Ringkolben 11 und der innere Ringkolben 10 jeweils einen Kolbenbund 13 auf, denen das Waagebalkensystem 12 zugeordnet ist. Der Spannkolben 7 weist weiterhin eine Aufnahme 14 auf, in der schwenkbar ein Koppelglied 15 gelagert ist, das mit seinen Enden in den äußeren Ringkolben 11 und in den inneren Ringkolben 10 eingreift, wie insbesondere aus Fig. 3 ersichtlich ist, die auch zeigt, daß das Waagebalkensystem 12 mit dem Koppelglied 15 mehrfach vorgesehen ist in einer gleichmäßig über den Umfang verteilten Anordnung. Der zentrale Abschnitt jedes Koppelgliedes 15 ist dabei ballig geformt.

Die Fig. 1 zeigt, daß im Futterkörper 2 Führungsflächen 16 ausgebildet sind, an denen jeder Kolbenbund 13 in axialer Richtung geführt ist.

Die Spannzange 3 weist eine geradzahlige Anzahl von Spannsegmenten 4 auf, die paarweise zusammengefasst und jeweils paarweise dem inneren Ringkolben 10 oder dem äußeren Ringkolben 11 zur gemeinsamen axialen Verstellung zugeordnet sind, wobei wie bei Spannzangen 3 üblich zwischen den Spannsegmenten 4 diese elastisch miteinander koppelnde Koppelelemente 17 angeordnet sind, indem ein Gummipuffer dazwischen vulkanisiert wird.

Die Spannzange 3 ist austauschbar in dem Futterkörper 2 angeordnet, wobei in dem gezeigten Ausführungsbeispiel die einzusetzenden Spannzangen 3 axial feststehend sind, im Rahmen der Erfindung aber auch eine Realisierung möglich ist, bei der diese beweglich ausgeführt sind, um so einen Niederzug zu erzeugen.

Ist in den Futterkörper 2, wie in der Zeichnung dargestellt, eine Spannzange 3 eingesetzt, die sich zum Spannen rechteckiger Werkstücke eignet, so erfolgt der Spannvorgang, indem das Werkstück zwischen den Spannsegmenten 4 der geöffneten Spannzange 3 positioniert wird und über eine Verstellung des Spannkolbens 7 das Spannkonusteil 6 in axialer Richtung verschoben wird. Dabei werden die Spannsegmente 4 radial nach innen verstellt und entweder die dem äußeren Ringkolben 11 oder die dem inneren Ringkolben 10 zugeordneten Spannsegmente 4 kommen als erstes an dem Werkstück zur Anlage und bewirken dessen zentrische Ausrichtung in dieser Spannrichtung. Durch die fortgesetzte Verstellung des Spannkolbens 7 tritt das Waagebalkensystem 12 in Funktion, da die dem Werkstück anliegenden Spannsegmente 4 eine weitere Verschiebung des dadurch gehemmten inneren Ringkolbens 10 oder äußeren Ringkolbens 11 verhindern und unter Schrägstellung des Koppelgliedes 15 bei fortgesetzter Verstellung des Spannkolbens 7 die komplementären Spannsegmente 4 an dem Werkstück auf orthogonalen Seitenflächen zur Anlage kommen. Auch in dieser Richtung erfolgt eine zentrische Spannung. Dabei folgt ein Ausgleich eines Maßunterschiedes, der bei Rohmaterialien durchaus +/- 1,5 mm ereichen kann.

## Patentansprüche

1. Spannzangenfutter mit einem Futterkörper (2) und mit einer Mehrzahl von zu einer Spannzange (3) zusammengefaßten Spannsegmenten (4), die zu ihrer radialen Verstellung einem einen Spannkonus (5) aufweisenden Spannkonusteil (6) anliegen, das mittels eines axial verschiebbaren Spannkolbens (7) axial verstellbar ist, **dadurch gekennzeichnet, daß** das Spannkonusteil (6) in Umfangsrichtung geteilt ausgebildet ist mit einem inneren Ringkolben (10) und einem äußeren Ringkolben (11), deren Konussegmente sich in Umfangsrichtung zu dem Spannkonus (5) ergänzen und jeweils nur zwei einander gegenüberliegende Spannsegmente (4) anliegen, und daß der innere Ringkolben (10) und der äußere Ringkolben (11) auf gegenüberliegenden Seiten des Spannkolbens (7) angeordnet und durch ein Waagebalkensystem (12) zur axialen Verstellung mit diesem gekoppelt sind.

2. Spannzangenfutter nach Anspruch 1, **dadurch gekennzeichnet, daß** der Spannkolben (7) und der äußere Ringkolben (11) und der innere Ringkolben (10) jeweils einen Kolbenbund (13) aufweisen, denen das Waagebalkensystem (12) zugeordnet ist.

3. Spannzangenfutter nach Anspruch 1 oder 2, **dadurch gekennzeichnet, daß** die Spannzange (3) mit ihren Spannsegmenten (4) austauschbar in dem Spannkonusteil (6) angeordnet ist.

4. Spannzangenfutter nach einem der Ansprüche 1 bis 3, **dadurch gekennzeichnet, daß** die Spannzange (3) eine geradzahlige Anzahl von Spannsegmenten (4) aufweist, die paarweise zusammengefaßt und jeweils paarweise dem inneren Ringkolben (10) oder dem äußeren Ringkolben (11) zur gemeinsamen axialen Verstellung zugeordnet sind.

5. Spannzangenfutter nach einem der Ansprüche 1 bis 4, **dadurch gekennzeichnet, daß** das Waagebalkensystem (12) gebildet ist mit einem in einer Aufnahme (14) des Spannkolbens (7) schwenkbar gelagerten Koppelglied (15), das mit seinen Enden in den äußeren Ringkolben (11) und den inneren Ringkolben (10) eingreift.

6. Spannzangenfutter nach Anspruch 5, **dadurch gekennzeichnet, daß** der zentrale Abschnitt des Koppelgliedes (15) ballig geformt ist.

7. Spannzangenfutter nach Anspruch 5 oder 6, **dadurch gekennzeichnet, daß** das Koppelglied (15) mehrfach vorgesehen ist in einer gleichmäßig über den Umfang verteilten Anordnung.

8. Spannzangenfutter nach einem der Ansprüche 2 bis 7, **dadurch gekennzeichnet, daß** jeder Kolbenbund (13) in axialer Richtung im Futterkörper (2) an Führungsflächen (16) geführt ist.

9. Spannzangenfutter nach einem der Ansprüche 1 bis 8, **dadurch gekennzeichnet, daß** der Spannkolben (7) mit einem Kammerbund (8) in einer mit Druckmittelanschlüssen versehenen Kolbenkammer (9) angeordnet ist.

10. Spannzangenfutter nach einem der Ansprüche 1 bis 8, **dadurch gekennzeichnet, daß** der Spannkolben (7) über eine Zugstange oder ein Zugrohr mit einem doppeltwirkenden Spannzylinder verbunden ist.

11. Spannzangenfutter nach einem der Ansprüche 1 bis 10, **dadurch gekennzeichnet, daß** zwischen benachbarten Spannsegmenten (4) diese elastisch miteinander koppelnde Koppelelemente (17) angeordnet sind.

12. Spannzangenfutter nach Anspruch 11, **dadurch gekennzeichnet, daß** die Koppelelemente (17) durch zwischen die Spannsegmente (4) vulkanisierte Gummipuffer gebildet sind.

## Claims

1. A collet chuck comprising a chuck body (2) and a plurality of clamping segments (4) which are assembled to provide a collet (3) and which for radial displacement thereof bear against a clamping cone portion (6) which has a clamping cone (5) and which is axially displaceable by means of an axially slidable clamping piston (7), **characterised in that** the clamping cone portion (6) is of a configuration divided in the peripheral direction having an inner annular piston (10) and an outer annular piston (11), the cone segments of which supplement each other in the peripheral direction to form the clamping cone (5) and respectively bear against only two mutually opposite clamping segments (4), and that the inner annular piston (10) and the outer annular piston (11) are arranged on opposite sides of the clamping piston (7) and are coupled thereto by a balance beam system (12) for axial displacement.

2. A collet chuck according to claim 1 **characterised in that** the clamping piston (7) and the outer annular piston (11) and the inner annular piston (10) each have a respective piston collar (13) with which the balance beam system (12) is associated.

3. A collet chuck according to claim 1 or claim 2 **characterised in that** the collet (3) with its clamping segments (4) is arranged interchangeably in the clamping cone portion (6).

4. A collet chuck according to one of claims 1 to 3 **characterised in that** the collet (3) has an even number of clamping segments (4) which are assembled in paired relationship and which are respectively associated in paired relationship with the inner annular piston (10) or the outer annular piston (11) for joint axial displacement.

5. A collet chuck according to one of claims 1 to 4 **characterised in that** the balance beam system (12) is formed with a coupling member (15) which is mounted pivotably in a receiving means (14) of the clamping piston (7) and which engages with its ends into the outer annular piston (11) and the inner annular piston (10).

6. A collet chuck according to claim 5 **characterised in that** the central portion of the coupling member (15) is of a spherical configuration.

7. A collet chuck according to claim 5 or claim 6 **characterised in that** the coupling member (15) is provided a plurality of times in an arrangement distributed uniformly around the periphery.

8. A collet chuck according to one of claims 2 to 7 **characterised in that** each piston collar (13) is guided in the axial direction in the chuck body (2) at guide surfaces (16).

9. A collet chuck according to one of claims 1 to 8 **characterised in that** the clamping piston (7) is arranged with a chamber collar (8) in a piston chamber (9) provided with pressure fluid connections.

10. A collet chuck according to one of claims 1 to 8 **characterised in that** the clamping piston (7) is connected to a double-acting clamping cylinder by way of a pulling bar or a pulling tube.

11. A collet chuck according to one of claims 1 to 10 **characterised in that** arranged between adjacent clamping segments (4) are coupling elements (17) elastically coupling them together.

12. A collet chuck according to claim 11 **characterised in that** the coupling elements (17) are formed by vulcanised rubber buffers between the clamping segments (4).

## Revendications

1. Mandrin à pince de serrage, comprenant un corps de mandrin (2) et une pluralité de segments de serrage (4) qui sont regroupés pour former une pince de serrage (3) et, en vue de leur réglage radial, sont appliqués contre un élément à cône de serrage (6) qui présente un cône de serrage (5) et peut être réglé axialement au moyen d'un piston de serrage (7) déplaçable dans le sens axial, **caractérisé par le fait que** l'élément à cône de serrage (6) est divisé dans la direction périphérique et comporte un piston annulaire intérieur (10) et un piston annulaire extérieur (11) dont les segments de cône se complètent dans la direction périphérique pour former le cône de serrage (5) et sont appliqués respectivement seulement contre deux segments de serrage (4) situés en vis-à-vis l'un de l'autre, et **par le fait que** le piston annulaire intérieur (10) et le piston annulaire extérieur (11) sont disposés sur des faces opposées du piston de serrage (7) et sont accouplés à celui-ci par un système à fléau de balance (12), en vue du réglage axial.

2. Mandrin à pince de serrage selon la revendication 1, **caractérisé par le fait que** le piston de serrage (7) et le piston annulaire extérieur (11) et le piston annulaire intérieur (10) présentent chacun un collet de piston (13) auquel est associé le système à fléau de balance (12).

3. Mandrin à pince de serrage selon la revendication 1 ou 2, **caractérisé par le fait que** la pince de serrage (3), avec ses segments de serrage (4), est disposée de façon remplaçable dans l'élément à cône de serrage (6).

4. Mandrin à pince de serrage selon une des revendications 1 à 3, **caractérisé par le fait que** la pince de serrage (3) présente un nombre pair de segments de serrage (4) qui sont regroupés par paires et sont associés chaque fois par paires au piston annulaire intérieur (10) ou au piston annulaire extérieur (11), en vue du réglage axial commun.

5. Mandrin à pince de serrage selon une des revendications 1 à 4, **caractérisé par le fait que** le système à fléau de balance (12) est réalisé avec une pièce d'accouplement (15) qui est montée pivotante dans un logement (14) du piston de serrage (7) et s'engage avec ses extrémités dans le piston annulaire extérieur (11) et le piston annulaire intérieur (10).

6. Mandrin à pince de serrage selon la revendication 5, **caractérisé par le fait que** la partie centrale de la pièce d'accouplement (15) est réalisée sous une forme bombée.

7. Mandrin à pince de serrage selon la revendication 5 ou 6, **caractérisé par le fait que** la pièce d'accouplement (15) est prévue plusieurs fois, dans une disposition uniformément répartie sur le pourtour.

8. Mandrin à pince de serrage selon une des revendications 2 à 7, **caractérisé par le fait que** chaque collet de piston (13) est guidé sur des surfaces de guidage (16) dans le sens axial dans le corps de mandrin (2).

9. Mandrin à pince de serrage selon une des revendications 1 à 8, **caractérisé par le fait que** le piston de serrage (7) est monté avec un collet de chambre (8) dans une chambre de piston (9) dotée de raccords de fluide sous pression.

10. Mandrin à pince de serrage selon une des revendications 1 à 8, **caractérisé par le fait que** le piston de serrage (7) est relié par une bielle de traction ou un tube de traction à un vérin de serrage à double effet.

11. Mandrin à pince de serrage selon une des revendications 1 à 10, **caractérisé par le fait qu'**entre des segments de serrage (4) voisins, il est prévu des éléments d'accouplement (17) reliant lesdits segments élastiquement entre eux.

12. Mandrin à pince de serrage selon la revendication 11, **caractérisé par le fait que** les éléments d'accouplement (17) sont constitués de tampons en caoutchouc qui sont intercalés par vulcanisation entre les segments de serrage (4).
